(19) Europäisches Patentamt
European Patent Office
Office européen des brevets

(11) **EP 1 650 892 A1**

(12) **EUROPEAN PATENT APPLICATION**

(43) Date of publication:
26.04.2006 Bulletin 2006/17

(51) Int Cl.:
*H04L 1/06* (2006.01)          *H04B 1/707* (2006.01)
*H04L 25/02* (2006.01)

(21) Application number: 06100952.8

(22) Date of filing: 05.12.2001

(84) Designated Contracting States:
AT BE CH CY DE DK ES FI FR GB GR IE IT LI LU
MC NL PT SE TR

(30) Priority: 13.12.2000 US 255098 P

(62) Document number(s) of the earlier application(s) in
accordance with Art. 76 EPC:
01270243.7 / 1 342 336

(71) Applicant: INTERDIGITAL TECHNOLOGY
CORPORATION
Wilmington, DE 19801 (US)

(72) Inventors:
• Kim, Younglok
  Fort Lee, NJ 07024 (US)
• Zeira, Ariela
  Huntington, NY 11743 (US)

(74) Representative: Pierrou, Mattias et al
Awapatent AB,
P.O. Box 45 086
104 30 Stockholm (SE)

Remarks:
This application was filed on 27 - 01 - 2006 as a
divisional application to the application mentioned
under INID code 62.

(54) **Modified block space time transmit diversity decoder**

(57)    The present invention is a system and method for transmitting data symbols in a CDMA communication system including a transmitter having an antenna array and a receiver. The system generates a first and second data field of symbols, then encodes them to produce complex conjugates of the respective symbols. A first communication burst including the first and second data fields, which are separated by a midamble, over a first antenna, and a second communication burst produced using said complex conjugates of said first and second data fields, which are separated by a midamble, over a second antenna are then transmitted by the transmitter. The receiver then receives and decodes the first and second communication bursts to recover the first and second data fields.

**FIG. 2**

**Description**

BACKGROUND

The present invention relates to communications systems imploring code division multiple access (CDMA) techniques. More particularly, the present invention relates to a transmission diversity scheme which can be applied to a CDMA communication system.

Spacial diversity has been proposed for support of very high data rate users within third generation wide band code division multiple access systems. Using multiple antennas, the systems achieve better gains and link quality, which results in increased system capacity. Classically, diversity has been exploited through the use of either beam steering or through diversity combining.

More recently, it has been realized that coordinated use of diversity can be achieved through the use of space-time codes. Such systems can theoretically increase capacity by up to a factor equaling the number of transmit and receive antennas in the array. Space-time block codes operate on a block of input symbols producing a matrix output over antennas and time.

In the past, space-time transmit diversity systems have transmitted consecutive symbols simultaneously with their complex conjugates. This type of system, though may result in symbol overlap at the receiving end, with the amount of overlap being dependent on the length of the impulse response of the propagation channel. In time division duplex (TDD) mode, this symbol overlap will have to be accounted for in the joint detection receiver. The joint detector will have to estimate the transmitted symbols and their conjugates, resulting in an increase in complexity of the joint detection.

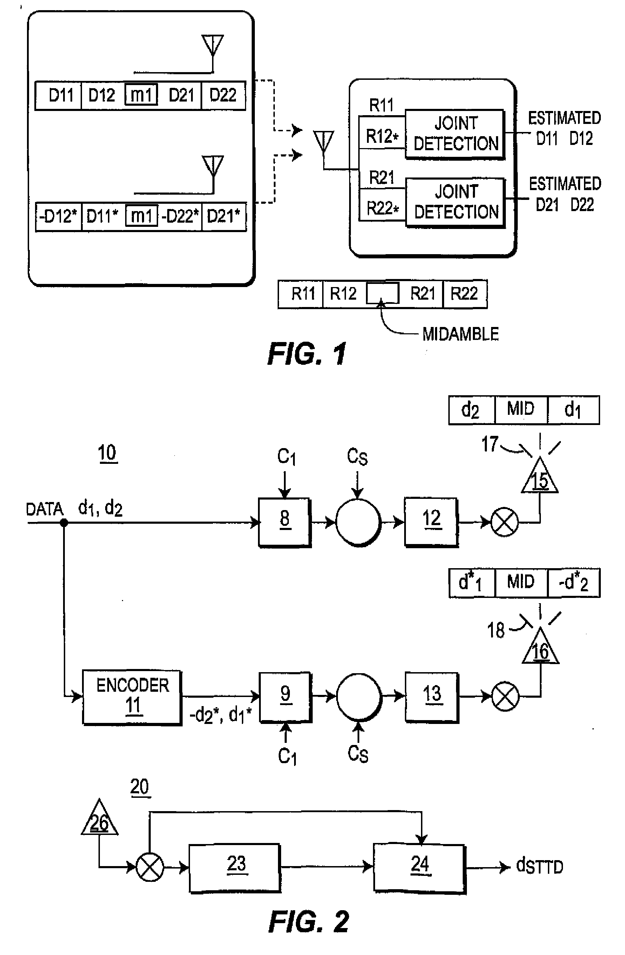

In order to alleviate this increase in joint detection, systems have been created which transmit two similar but different data fields. The first data field, having a first portion, $D_{11}$, and a second portion, $D_{12}$, is transmitted by the first antenna. A second data field is produced by modifying the first data field. The negation of the conjugate of $D_{12}$, $-D_{12}^*$, is the first portion of the second data field and the conjugate of $D_{11}$, $D_{11}^*$, is the second portion. The second data field is simultaneously transmitted by the second antenna. This type of system results in the joint detection implemented at the receiver needing only to estimate the same amount of symbols as in the case of a single transmit antenna. A block diagram of this system is illustrated in Figure 1.

Neglecting the cross interference between the blocks the received signal model can be approximated as

$$\begin{bmatrix} \vec{r} \\ \vec{r}_2^* \end{bmatrix} = \underbrace{\begin{bmatrix} A_{11} & -B_{11} \\ B_{22}^* & A_{22}^* \end{bmatrix}}_{E} \cdot \begin{bmatrix} \vec{d}_1 \\ \vec{d}_2^* \end{bmatrix} + \begin{bmatrix} \vec{n}_1 \\ \vec{n}_2^* \end{bmatrix} \qquad \text{Equation}$$

$$1$$

where

$$\vec{d}_1 = \begin{bmatrix} S_1, S_2, \cdots, S_{N/2} \end{bmatrix}^T$$
$$\vec{d}_2 = \begin{bmatrix} S_{N/2+1}, S_{N/2+2}, \cdots, S_N \end{bmatrix}^T$$

are the vector forms of the transmit symbol sequences. $A_{ij}$ and $B_{ij}$ are the sub-matrices of the banded propagation matrices $A$ and $B$ according to the channels from antenna 1 and 2 to a specific user respectively. They are rewritten by the following (2 x 2) block matrix representations:

$$A = \begin{bmatrix} A_{11} & 0 \\ A_{21} & A_{22} \end{bmatrix}, \qquad B = \begin{bmatrix} B_{11} & 0 \\ B_{21} & B_{22} \end{bmatrix}.$$

Each column of the matrices $A$ and $B$ is the shifted versions of the convolution of the spreading code and the channel impulse response from the first and diversity antennas respectively.

The model of Equation 1 can be solved using a MMSE BLE by

$$\begin{bmatrix} \vec{d}_{mmse1} \\ \vec{d}_{mmse2}{}^* \end{bmatrix} = D^{-1} \cdot E^H \begin{bmatrix} \vec{r}_1 \\ \vec{r}_2{}^* \end{bmatrix}, \quad \text{with} \quad D = E^H E + \sigma_n^2 I \qquad \text{Equation 2}$$

where $\sigma_n^2$ is the variance of the additive white Gaussian noise. It can be simplified using the sub-block matrix manipulations and banded Toeplitz approximations.

The problem with the above-transmit diversity system is that the first and second portion, $D_{11}$, $D_{12}$ of the first data field requires the same number of symbols in each of the portions. Some TDD data fields include an odd number of symbols. Therefore, when the data field is split into two portions, the portions have a different number of symbols. A method to deal with this inequality must be implemented. One approach duplicates the first symbol to alleviate this problem. Other approaches are known in the art. Utilizing one of these methods results in additional computations for joint detection at the receiver. In particular, the first symbol is not STTD encoded, and hence the STTD encoder output becomes:

$$S_1, -(S_{(N+1)/2+1}, S_{(N+1)/2+2}, \cdots, S_N)^*, \qquad (S_2, S_3, \cdots, S_{(N+1)/2})^*$$

Furthermore, the initial approximation by eliminating the center elements of Equation 1 introduces a small error in the joint detection process.

Accordingly, there exists a need for other transmit diversity systems.

SUMMARY

The present invention is a system and method for transmitting data symbols in a CDMA communication system including a transmitter having an antenna array and a receiver. The system generates a first and second data field of symbols, then encodes them to produce complex conjugates of the respective symbols. A first communication burst including the first and second data fields, which are separated by a midamble, over a first antenna, and a second communication burst produced using said complex conjugates of said first and second data fields, which are separated by a midamble, over a second antenna are then transmitted by the transmitter. The receiver then receives and decodes the first and second communication bursts to recover the first and second data fields.

BRIEF DESCRIPTION OF THE DRAWINGS

Figure 1 is a block diagram of a prior art communication system employing space-time transmit diversity.

Figure 2 is a block diagram of a transmitter and receiver in a communication system in accordance with the preferred embodiment of the present invention.

Figure 3 is a flow diagram of the transmit diversity system of the present invention

Figure 4 is a graphical illustration of the performance of the present invention.

DETAILED DESCRIPTION OF THE PREFERRED EMBODIMENTS

Figure 2 is a block diagram of a transmitter 10, preferably located at a base station, and a receiver 20, preferably located at a user equipment (UE), in a CDMA communication system in accordance with the preferred embodiment of the present invention. Although it is preferable to have the transmitter located at a base station and the receiver located at the UE, the receiver and transmitter may switch locations and the present invention operate on an uplink communication. The transmitter 10 comprises a block encoder 11, a plurality of channelization devices 8, 9, a plurality of spreading sequence insertion devices 12, 13, and a plurality of antennas 15, 16. Although Figure 1 illustrates a transmitter comprising two (2) antennas, it should be apparent to those having skill in the art that more than two (2) antennas may be used, such as N antennas.

A typical communication burst has two data fields separated by a midamble sequence. Data to be transmitted by the transmitter 10 is produced by a data generator (not shown). The resulting data symbols $(S_{11}, S_{12}, ... S_{1x})$ of the first data field and $(S_{21}, S_{22}, ... S_{2x})$ of the second data field, represented as $d_1$ and $d_2$ respectively, are forwarded to the first channelization device 8 and the block encoder 11. Preferably, the block encoder 11 is a block space time transmit diversity (BSTTD) encoder. The bock encoder 11 encodes the input symbols of both data fields $d_1$, $d_2$ and generates the complex conjugate of $d_1$ and the negation of the complex conjugate of $d_2$: $d_1{}^*$, $-d_2{}^*$. The encoder 11 also changes the order of the data fields so that $-d_2{}^*$ is ahead of $d_1{}^*$.

Once the complex conjugates have been generated and the order changed, the encoder 11 forwards the two data fields $-d_2{}^*$, $d_1{}^*$ to a second channelization device 9. The first and second channelization devices 8, 9 spread their respective data fields using the same channelization code. The first channelization device spreading data fields $d_1$, $d_2$

and the second channelization device spreading data fields $-d_2^*$, $d_1^*$. The spread data fields from each of the channelization devices 8, 9 are then scrambled using a scrambling code associated with the transmitter 10.

After each spread data field is scrambled, they are forwarded to a first and second training sequence insertion device 12,13, respectively. Spread data fields $d_1$, $d_2$ are forwarded to the first training sequence device 12 and spread data fields $-d_2^*$, $d_1^*$ are forwarded to the second training sequence device 13. The training sequence devices 12, 13 insert between the spread data fields associated with each respective sequence device 12, 13 a first and second midamble, respectively. The first midamble is associated with a first of the plurality of antennas 15 and the second midamble is associated with a second of the plurality of antennas 15. The insertion of the midamble between the spread data fields produces two communication bursts 17, 18, respectively. A typical communication burst 17 has the midamble, a guard period, and two data fields $d_1$, $d_2$, as shown in Figure 2. The two bursts 17, 18 are modulated and simultaneously transmitted to the receiver 20 over antenna 15 and diversity antenna 16, respectively.

Referring back to Figure 2, the receiver 20 comprises two joint detection devices (JD) 24, a BSTTD decoder 22, a channelization device 23, and an antenna 26. The antenna 26 of the UE receives various RF signals including the communication bursts 12,18 from the transmitter 10. The RF signal are then demodulated to produce a baseband signal.

The baseband signal is then forwarded to the JD 24 and the channel estimation device 23. The channel estimation device 23 provides channel information, such as channel impulse responses, to the JD 24. The JD 24 are coupled to the channel estimation device 23 and the BSTTD decoder utilizes the channel information and the channelization codes to detect the data fields $d_1$, $d_2$, $-d_2^*$, $d_1^*$ of the transmitted communication bursts 17,18 in the received signal. The exact received signal model in accordance with the preferred embodiment of the present invention can be represented by:

$$\begin{bmatrix} r_1 \\ r_2^* \end{bmatrix} = \begin{bmatrix} A & -B \\ B^* & A^* \end{bmatrix} \begin{bmatrix} d_1 \\ d_2^* \end{bmatrix} + \begin{bmatrix} n_1 \\ n_2^* \end{bmatrix}$$

### Equation 3

where $r_1$ and $r_2$ are the received signals, and $d_1$ and $d_2$ are the transmitted symbol sequence of the first and second data fields, respectively. As those skilled in the art know, A and B are the banded propagation matrices according to the channels from antennas 15 and 16. Since the d1 and d2 are bordered by the guard period and the midamble, which is typically cancelled, the middle terms of the within a data field encoding drop out. Accordingly, Equation 3 is not an approximation.

The JDs 24, 25 may use any type of data detection method and, preferably, which utilizes the above representation of the received signal. Preferably, a minimum means square encoder block linear equalizer (MMSE BLE) method is used for data detection. The MMSE BLE based data detection is written by

$$\begin{bmatrix} d_{mmse1} \\ d_{mmse2}^* \end{bmatrix} = D^{-1} \begin{bmatrix} d_{wmf1} \\ d_{wmf2}^* \end{bmatrix} \qquad \text{Equation}$$

4

where

$$D = E^H E + \sigma_n^2 I = \begin{bmatrix} D_{11} & D_{21}^H \\ D_{21} & D_{11}^* \end{bmatrix} \qquad \text{Equation}$$

5

with

$$D_{11} = A^H A + (B^H B)^* + \sigma_n^2 I$$
$$D_{21} = (B^H A)^T - B^H A$$

$(\cdot)^T$, $(\cdot)^H$ and $(\cdot)^*$ denote the transpose, complex conjugate transpose and complex conjugate functions, respectively. Using the cycle reduction for the Cholesky decomposition of the banded Toeplitz matrix together with some sub-matrix manipulation, the data fields $d_1$, $d_2$, $-d_2^*$, $d_1^*$ are estimated by the JD 24 using the block STTD BLE-JD algorithm, for example.

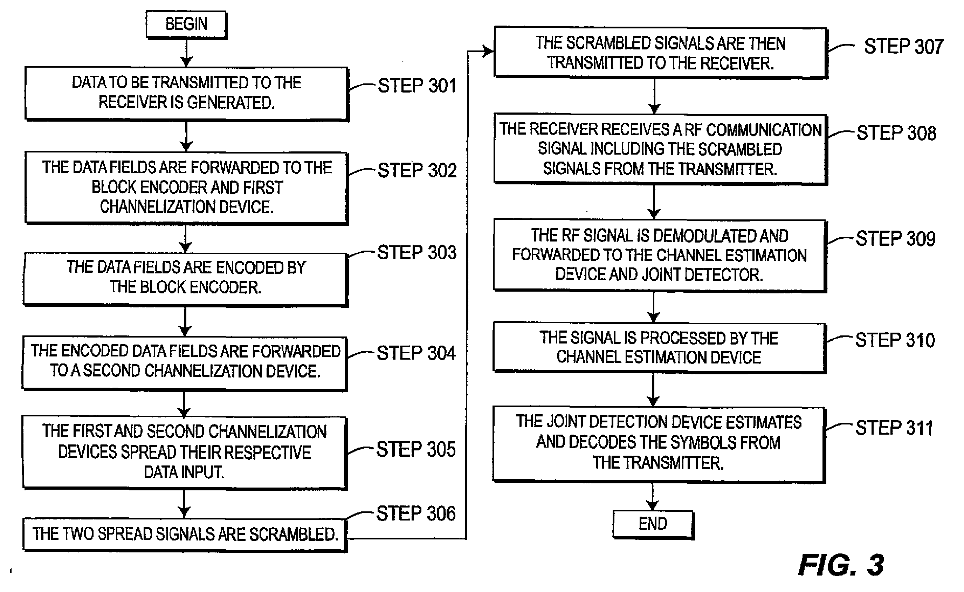

The flow diagram of the communication system the present invention is illustrated in Figure 3. A data generator generates data to be transmitted to the receiver 20 (Step 301). The data fields $d_1$, $d_2$ are forwarded to the block encoder 11 and the first channelization device 8 (Step 302). The sub-data fields forwarded to the block encoder 11 are encoded (Step 303) and forwarded to the second channelization device 9 (Step 304). Each channelization device 8, 9 spreads their respective data field input using a channelization code (Step 305). The two spread signals are then scrambled, using the scrambling code associated with the transmitter 10 (Step 306) and transmitted to the receiver 20 over diversity antennas 15, 16 (Step 307).

The receiver 20 receives an RF communication signal including the two spread signals from the diversity antennas 15, 16 (Step 308), demodulates the signal and forwards the demodulated signal to the channel estimation device 23 and joint detection device 24 (Step 309). The received signal is processed by the channel estimation device 23 (Step 310) and the channel information is applied by the joint detection devices 24, 25 along with the channelization codes, to estimate and decode the transmit symbols from the diversity antennas 15, 16 (Step 311), yielding the data fields soft symbols.

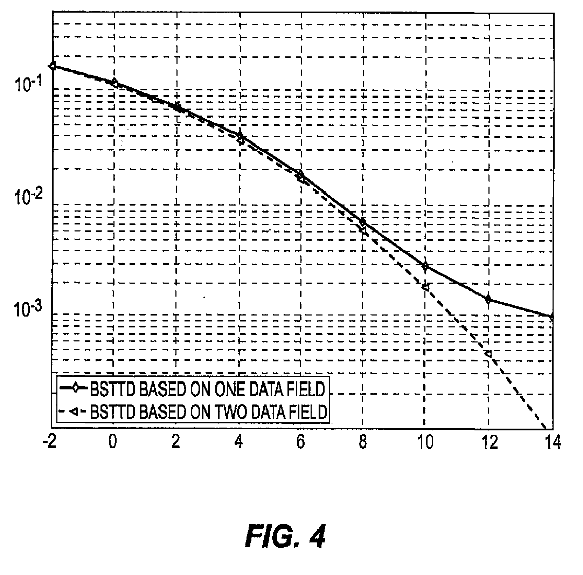

The system of the preferred embodiment provides an efficient method of transmitting data using block space time transmit diversity over a CDMA communication system. Figure 4 is a graphical illustration of the performance of the system of the present invention, BSTTD based on two data fields, versus the conventional BSTTD based on one data field. The improved performance of the present invention is partly due to the fact that the interference between the two data fields is not introduced, due to the midamble and guard period separation between them. The present invention also eliminates the need for the receiver to compensate for the unequal data field portion encoding by using the first symbol twice or implementing some other method of compensation providing a less complex system when transmitting a data field with an odd number of symbols.

**Claims**

1.  A method for receiving data symbols in a CDMA communication system, the method including the steps of:

    receiving (308) an RF communication signal which include two spread signals in the form of a first communication burst (17) and a second communication burst (18);
    detecting (311) a first and a second data field of symbols separated by a first midamble from the first communication burst (17);
    decoding (311) the first and second data fields to data symbols of the first communication burst (17);
    detecting (311) another two data fields separated by a second midamble from said second communication burst (18);
    producing a second set of first and second data fields, wherein the first data field of the second set is produced using the complex conjugate of a first data field of said another two data fields, and the second data field of the second set is produced using the negation of the complex conjugate of a second data field of said another two data fields; and
    decoding (311) the first and second data fields of the second set to data symbols of the second communication burst (18).

2.  The method of claim 1, wherein said steps of detecting data fields include:

    estimating (310) channel impulse responses of the first and second communication bursts (17 and 18) using said burst's midambles; and
    detecting (311) the data fields of the first and second communication bursts (17 and 18) in response to the channel impulse responses.

3.  A receiver (20) that receives data symbols in a CDMA communication system, the receiver including:

    an antenna (26) for receiving an RF communication signal which includes two spread signals in the form of a first communication burst (17) and a second communication burst (18);
    a first joint detection device (24) for detecting a first and a second data field of symbols separated by a first midamble from the first communication burst (17), and for decoding the first and second data fields to data symbols of the first communication burst (17);

a second joint detection device (25) for detecting (311) another two data fields separated by a second midamble from said second communication burst (18); and

means for producing a second set of first and second data fields, wherein the first data field of the second set is produced using the complex conjugate of a first data field of said another two data fields, and the second data field of the second set is produced using the negation of the complex conjugate of a second data field of said another two data fields;

said second joint detection device (25) being adapted for decoding the first and second data fields of the second set to data symbols of the second communication burst (18).

4. A user equipment including the receiver (20) as claimed in claim 3.

5. A base station including the receiver (20) as claimed in claim 3.

6. A method for transmitting data symbols in a CDMA communication system including a transmitter having an antenna array and a receiver, the method comprising the steps of:

generating a first and second data field of symbols;

encoding said first and second data field producing complex conjugates of the symbols of said first and second data field;

transmitting from the said transmitter a first communication burst including said first and second data fields separated by a midamble over a first antenna and a second communication burst produced using said complex conjugates of said first and second data fields separated by a midamble over a second antenna; and

receiving and decoding at said receiver said first and second communication bursts to recover said first and second data fields.

7. The method of claim 6 wherein said encoding includes producing the negation of said complex conjugates of said second data field symbols.

8. The method of claim 7 further comprising the step of generating said first and second communication burst wherein said first communication burst comprises said first data field followed by said first burst midamble followed by said second data field; and

said second communication burst comprises said negative complex conjugate of said second data field followed by said second burst midamble followed by said complex conjugate of said first data field.

9. The method of claim 8 wherein said receiving and decoding step comprises:

estimating a channel response of said first and second communication bursts using said bursts' midambles; and

detecting the symbols of said first and second communication bursts in response to said channel response.

10. The method of claim 9 wherein a base station includes said receiver and a user equipment includes said transmitter.

11. The method of claim 9 wherein a user equipment (UE) includes said receiver and a base station includes said transmitter.

12. A CDMA communication system including a base station and a user equipment (UE), comprising:

an encoder which encodes a first and second data field of symbols to produce complex conjugates of the symbols of said first and second data fields;

a first and second antenna of a transmitter which transmits RF signals including a first and second communication burst, wherein said first communication burst including said first and second data fields separated by a midamble is transmitted by said first antenna and said second communication burst produced using said complex conjugates of said first and second data fields separated by a midamble is transmitted by said second antenna; and

a receiver comprising a decoder which decodes said RF signals to recover said first and second data fields.

13. The system of claim 12 wherein said encoder negates said complex conjugate of said second data field.

14. The system of claim13 wherein said transmitter further comprises:

a first burst generator, associated with said first antenna, which generates a first communication burst including said first data field followed by said first burst midamble followed by said second data field; and

a second burst generator, associated with said second antenna, which generates a second communication burst including said negated complex conjugate of said second data field followed by said second burst midamble followed by said complex conjugate of said first data field.

15. The system of claim 14 wherein said base station includes said receiver and said UE includes said transmitter.

16. The system of claim 14 wherein said UE includes said receiver and said base station includes said receiver.

17. A transmitter which transmits data symbols in a CDMA communication system including a base station and a user equipment (UE), said transmitter comprising:

an encoder which encodes a first and second data field of symbols to produce complex conjugates of the symbols of said first and second data fields; and

a first and second antenna which transmit RF signals including a first and second communication burst, wherein said first communication burst including said first and second data fields separated by a midamble is transmitted by said first antenna and said second communication burst produced using said complex conjugates of said first and second data fields separated by a midamble is transmitted by said second antenna.

18. The transmitter of claim 17 wherein said encoder negates said complex conjugate of said second data field.

19. The transmitter of claim 18 further comprising:

a first burst generator, associated with said first antenna, which generates said first communication burst including said first data field followed by said first burst midamble followed by said second data field; and

a second burst generator, associated with said second antenna, which generates said second communication burst including said negated complex conjugates of said second data field followed by said second burst midamble followed by said complex conjugates of said first data field.

20. The transmitter of claim 19 wherein said base station includes said receiver and said UE includes said transmitter.

21. The transmitter of claim 19 wherein said UE includes said receiver and said base station includes said receiver.

D11 | D12 | m1 | D21 | D22

-D12* | D11* | m1 | -D22* | D21*

R11
R12*   JOINT DETECTION   ESTIMATED D11 D12

R21
R22*   JOINT DETECTION   ESTIMATED D21 D22

R11 | R12 | | R21 | R22

MIDAMBLE

**FIG. 1**

$d_2$ | MID | $d_1$

17

15

$d_1^*$ | MID | $-d_2^*$

18

16

10

$C_1$    $C_S$

DATA   $d_1, d_2$

8

12

ENCODER 11    $-d_2^*, d_1^*$

9

13

$C_1$    $C_S$

20

26

23

24

$d_{STTD}$

**FIG. 2**

FIG. 3

BEGIN

STEP 301 — DATA TO BE TRANSMITTED TO THE RECEIVER IS GENERATED.

STEP 302 — THE DATA FIELDS ARE FORWARDED TO THE BLOCK ENCODER AND FIRST CHANNELIZATION DEVICE.

STEP 303 — THE DATA FIELDS ARE ENCODED BY THE BLOCK ENCODER.

STEP 304 — THE ENCODED DATA FIELDS ARE FORWARDED TO A SECOND CHANNELIZATION DEVICE.

STEP 305 — THE FIRST AND SECOND CHANNELIZATION DEVICES SPREAD THEIR RESPECTIVE DATA INPUT.

STEP 306 — THE TWO SPREAD SIGNALS ARE SCRAMBLED.

STEP 307 — THE SCRAMBLED SIGNALS ARE THEN TRANSMITTED TO THE RECEIVER.

STEP 308 — THE RECEIVER RECEIVES A RF COMMUNICATION SIGNAL INCLUDING THE SCRAMBLED SIGNALS FROM THE TRANSMITTER.

STEP 309 — THE RF SIGNAL IS DEMODULATED AND FORWARDED TO THE CHANNEL ESTIMATION DEVICE AND JOINT DETECTOR.

STEP 310 — THE SIGNAL IS PROCESSED BY THE CHANNEL ESTIMATION DEVICE

STEP 311 — THE JOINT DETECTION DEVICE ESTIMATES AND DECODES THE SYMBOLS FROM THE TRANSMITTER.

END

**FIG. 4**

European Patent
Office

**EUROPEAN SEARCH REPORT**

Application Number

EP 06 10 0952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 993 129 A (TEXAS INSTRUMENTS INC) 12 April 2000 (2000-04-12) * page 3, line 45 - page 4, line 58 * * figures 1,2 * ----- | 1-16 | H04L1/06 H04B1/707 H04L25/02 |
| P,X | EP 1 069 707 A (MOTOROLA INC) 17 January 2001 (2001-01-17) * abstract * * figure 2 * ----- | 1-16 | |
| E | WO 02/47278 A (INTERDIGITAL TECHNOLOGY CORPORATION) 13 June 2002 (2002-06-13) * the whole document * ----- | 1,3,6, 12,17 | |

| | TECHNICAL FIELDS SEARCHED (IPC) |
|---|---|
| | H04L H04B H04J |

The present search report has been drawn up for all claims

| Place of search | Date of completion of the search | Examiner |
|---|---|---|
| The Hague | 16 February 2006 | Toumpoulidis, T |

EPO FORM 1503 03.82 (P04C01)

EP 1 650 892 A1

**ANNEX TO THE EUROPEAN SEARCH REPORT
ON EUROPEAN PATENT APPLICATION NO.**                    EP 06 10 0952

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2006

| Patent document cited in search report | | Publication date | Patent family member(s) | | Publication date |
|---|---|---|---|---|---|
| EP 0993129 | A | 12-04-2000 | JP | 2000201102 A | 18-07-2000 |
| | | | KR | 2000028903 A | 25-05-2000 |
| EP 1069707 | A | 17-01-2001 | AU | 6432900 A | 30-01-2001 |
| | | | CA | 2379122 A1 | 18-01-2001 |
| | | | CN | 1360765 A | 24-07-2002 |
| | | | WO | 0105060 A1 | 18-01-2001 |
| WO 0247278 | A | 13-06-2002 | AT | 281723 T | 15-11-2004 |
| | | | AU | 2724102 A | 18-06-2002 |
| | | | CA | 2430720 A1 | 13-06-2002 |
| | | | CN | 1484900 A | 24-03-2004 |
| | | | DE | 60106970 D1 | 09-12-2004 |
| | | | DE | 60106970 T2 | 04-05-2005 |
| | | | EP | 1340334 A2 | 03-09-2003 |
| | | | ES | 2230393 T3 | 01-05-2005 |
| | | | JP | 2004524727 T | 12-08-2004 |
| | | | JP | 2005253095 A | 15-09-2005 |
| | | | MX | PA03005080 A | 05-09-2003 |
| | | | NO | 20032435 A | 28-05-2003 |

EPO FORM P0459

For more details about this annex : see Official Journal of the European Patent Office, No. 12/82